# EUROPÄISCHE PATENTSCHRIFT

(11) **EP 0 721 902 B1**
(45) Veröffentlichungstag und Bekanntmachung des Hinweises auf die Patenterteilung: **10.03.1999**
(21) Anmeldenummer: 95119351.5
(22) Anmeldetag: 08.12.1995
(51) Int. Cl.: B65G 47/36, B65G 47/61, B65G 9/00, B65G 17/20

(54) **Codierbarer Adapter zur Verwendung mit einer Hängeförderanlage**
Codable adapter for overhead conveyors
Adaptateur à code pour convoyeurs suspendus

(30) Priorität: 11.01.1995 DE 19500612
(43) Veröffentlichungstag der Anmeldung: 17.07.1996
(73) Patentinhaber: DÜRKOPP ADLER AKTIENGESELLSCHAFT, D-33719 Bielefeld (DE)
(72) Erfinder: Heer, Werner, D-33813 Oerlinghausen (DE); Brannahl, Rainer, D-33609 Bielefeld (DE); Zahn, Thomas, D-33689 Bielefeld (DE); Janzen, Paul, D-33609 Bielefeld (DE)
(74) Vertreter: Rehmann, Klaus-Thorsten, Dipl.-Ing.

(56) Entgegenhaltungen:
- DE-A- 3 917 630
- DE-A- 4 126 615
- DE-U- 9 209 079
- FR-A- 2 684 974

## Beschreibung

Die Erfindung betrifft einen Adapter für eine Hängeförderanlage, in der auf Bügeln hängendes Gut, insbesondere Kleidungsstücke, mittels eines Fördermittels entlang einer Transportbahn sortierend oder kommissionierend transportiert wird, wobei der Adapter mit das Gut betreffenden Daten codierbar und lose zwischen dem mit einem Bügelhaken versehenen Bügel für das Gut und dem Fördermittel einfügbar ist.

Hängeförderanlagen zum sortierenden bzw. kommissionierenden Fördern von Kleidungsstücken sind bekannt. Über geeignete in der Transportbahn befindliche Weichen werden die Kleidungsstücke in Speicher- und Sortierstrecken aus der Hauptstrecke ausgegleist und bei Bedarf über entsprechende Einschleusstellen wieder in die Hauptstrecke eingeschleust.

Aus der DE-U-92 09 079 und der DE-A-41 26 615 sind codierbare Adapterbügel bekannt, die verwendet werden, um bestimmte Gruppen von Kleidungsstücken identifizieren und trennen zu können, um diese innerhalb der Hängeförderanlage zu sortieren oder zu kommissionieren.

Die bekannten Adapter sind konstruktiv sehr aufwendig gestaltet und aus diesem Grund nicht nur recht kompliziert zu handhaben, sondern auch schwer und kostenintensiv zu fertigen. Außerdem sind die in den Adapter eingehängten Kleiderbügel nicht davor geschützt, Schwenkbewegungen auszuführen. Es ist daher nicht ausgeschlossen, daß sich während des Transports die Kleiderbügel verdrehen, wodurch zum einen ein erhöhter Platzbedarf besteht, zum anderen ein Verklemmen der Fördergutträger untereinander nicht ausgeschlossen ist. Außerdem können die Kleiderbügel aus dem Adapter herausfallen, was zur Verschmutzung der transportierten Kleidungsstücke führen kann.

Die DE-A-39 17 630 offenbart eine Vorrichtung zum Transport von auf Bügeln hängenden Kleidungsstücken durch eine Behandlungseinrichtung. Die Bügel werden mit ihren Haken in einen Schlitten eingehängt, der formschlüssig in der Führungsschiene geführt wird. Dieser Schlitten ist Teil der Förderanlage und kann nicht zwischen dem Fördermittel und dem Bügel bei Bedarf eingefügt werden. Außerdem sind im Aufnahmebereich zwei durch einen Steg abgetrennte Aufnahmetaschen mit schräg nach oben laufenden Schenkeln ausgebildet, so daß ein automatisches Be- oder Entladen der Vorrichtung nicht oder nur schwer möglich ist.

Die US-A-3,029,952 offenbart eine Trägervorrichtung mit der einzelne, kleinere Gegenstände in einer Hängeförderanlage durch verschiedene Reinigungs-, Lackier- und Trockenstationen transportiert werden können. Diese Trägereinrichtung weist einen hakenförmigen Kopfbereich auf, der in die Rollenkette der Hängeförderanlage eingehängt werden kann. Eine Mehrzahl von in die Trägereinrichtung einhängbare Aufnahmeleisten können die einzelnen Gegenstände aufnehmen, in dem diese über Haken in die Aufnahmeleisten eingehängt werden. Zur Verwendung zum sortierenden oder komissionierenden Transport von Kleidungsstücken ist diese Einrichtung nicht geeignet.

Von dieser Problemstellung ausgehend soll ein gattungsgemäßer Adapter so verbessert werden, daß Schwenkbewegungen des Bügelhakens ausgeschlossen sind und der Adapter einfach und kostengünstig herstellbar ist. Außerdem soll die Möglichkeit geschaffen werden, den Adapter automatisch be- und entladen zu können.

Zur Problemlösung zeichnet sich der eingangs genannte Adapter aus durch einen hakenförmigen Kopfbereich und einen unterhalb des Kopfbereichs liegenden Aufnahmebereich, wobei der Aufnahmebereich gebildet wird durch zwei beabstandete, parallel nebeneinander liegende Abschnitte, die jeweils einen U-förmigen Querschnitt aufweisen und von zwei nach oben ragenden Schenkeln gebildet wird, die den Bügelhaken über einen solchen Bereich überdecken, daß dieser verdrehsicher in den Aufnahmebereich einlegbar ist.

Durch diese einfache Ausgestaltung kann der Aufnahmebereich des Adapters als ein Kunststoffspritzteil gestaltet werden, und der hakenförmige Kopfbereich kann der Form eines handelsüblichen Kleiderbügelhakens entsprechen. Ein solcher Adapter ist besonders leicht und kann auch in herkömmlichen Fördersystemen, bei denen bisher die Kleidungsstücke mit ihren Bügeln direkt eingegeben wurden, Verwendung finden. Dadurch, daß die Abschnitte beabstandet sind, wird eine Öffnung im Aufnahmebereich des Adapters geschaffen, in die eine im Aufgabe- bzw. Entnahmebereich der Hängeförderanlage angeordnete Zuführ- bzw. Entnahmestange eingreifen kann, so daß zum selbstätigen Einhängen bzw. Entnehmen eines Bügels der Adapter so tief auf die Stange herabgeführt werden kann, daß die freien Enden der Abschnitte sich unterhalb der Zuführ- bzw. Entnahmestange befinden. Außerdem bewirken die beabstandeten Abstände die Verdrehsicherheit des Bügelhakens, da dieser statisch bestimmt an zwei Punkten im Adapter gehalten ist.

Wenn das den Code tragende Code-Element austauschbar ist, können kostengünstige Barcodes verwendet werden, die entsprechend der notwendigen Daten über die Eigenheit des Förderguts bzw. den Endpunkt der Sortierstrecke enthalten.

Ein Verfahren zum selbsttätigen Einhängen eines Bügels, bzw. Bügelhakens in den Aufnahmebereich dieses Adapters zeichnet sich dadurch aus, daß der einzuhängende Bügel mit seinem Bügelhaken auf einer Zuführstange ruht oder sich mit geringer Geschwindigkeit an ihr entlang bewegt, der Adapter oberhalb der Zuführstange von hinten an den Bügelhaken herangeführt wird, wobei die nebeneinander liegenden Abschnitte die Zuführstange zwischen sich aufnehmen und so weit über diese eintauchen, daß ihre in Richtung des Bügelhakens weisenden Schenkel sich unterhalb der oberen Krümmung des Bügelhakens befinden, der Adapter mit den hinteren Schenkeln an die obere Krümmung des Bügelhaken anstößt und den Bügel an seinem Bügelhaken bis ans Ende der Zuführstange schiebt, wo der Bügelhaken dann aufgrund der Gravitation in den Aufnahmebereich fällt.

Ein Verfahren zum selbsttätigen Entnehmen eines Bügels bzw. Bügelhakens aus dem Aufnahmebereich eines solchen Adapters zeichnet sich dadurch aus, daß der Adapter mit dem eingehängten Bügel über eine in Transportrichtung ansteigende Entnahmestange so geführt wird, daß sich diese unterhalb und zwischen den nebeneinander liegenden Abschnitten befindet, der Adapter unter Beibehaltung seiner Horizontallage so weit entlang der Entnahmestange geführt wird, bis diese den Bügelhaken über die in Transportrichtung vorderen kurzen Schenkel anhebt, wodurch der Kontakt zwischen Bügelhaken und Aufnahmebereich gelöst wird, und über eine sich an die Steigungsstrecke der Entnahmestange anschließende Gefällstrecke aufgrund der Gravitation der Bügelhaken aus dem Adapter herausfällt.

Mit dem erfindungsgemäßen Aufgabe- und Entnahmeverfahren wird der sortierende bzw. kommissionierende Transport von Bekleidungsstücken weiter rationalisiert, so daß sich die Durchlaufzeiten verkürzen und die Fehlerquote reduziert wird. Sowohl die Zuführstange als auch die Entnahmestange können relativ einfach und kostengünstig ausgebildet werden.

Mit Hilfe einer Zeichnung und mehreren Ausführungsbeispielen soll die Erfindung nachfolgend näher erläutert werden. Es zeigt:
- Figur 1 -: einen zur automatischen Beladung und Entnahme geeigneten Adapter in der Beladungsphase,
- Figur 2 -: den Adapter gemäß Figur 1 in der Entladungsphase,
- Figur 3 -: die schematische Darstellung der Beladung eines weiteren Adapters,

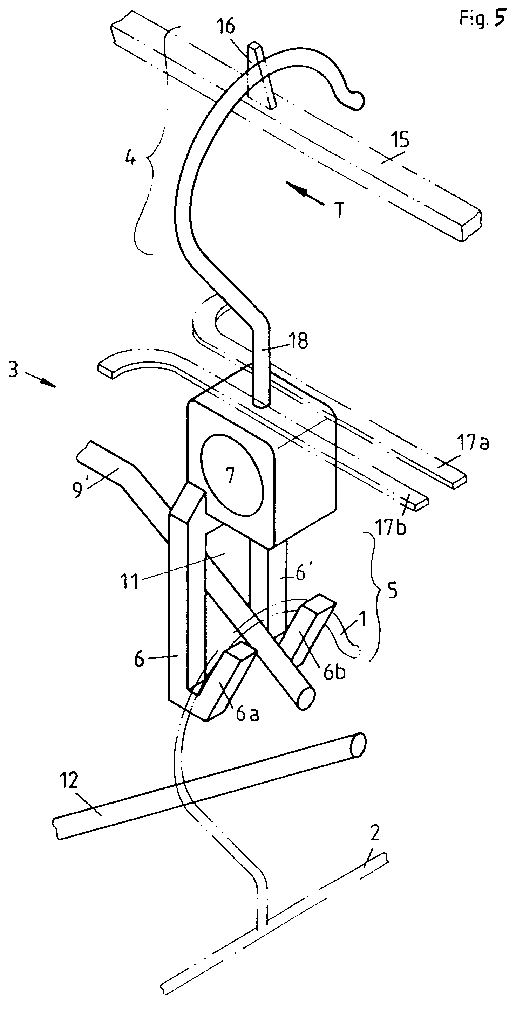

- Figur 4 -: die Seitenansicht gemäß Figur 3
- Figur 5 -: ein Ausführungsbeispiel des Adapters in der Endladungsphase.

Der Adapter 3 besteht aus dem hakenförmigen Kopfbereich 4 und dem darunter angeordneten Aufnahmebereich 5, für den einzuhängenden Kleiderbügel 2 bzw. Bügelhaken 1. Der Kopfbereich 4 hat vorzugsweise die Form eines handelsüblichen Kleiderbügelhakens, mit dem er in eine hier nicht näher dargestellte Förderanlage (auf das Fördermittel) eingehängt werden kann und ist in den Grundkörper 3a, an dem auch der Aufnahmebereich 5 ausgebildet ist, eingelassen. Zwischen dem Kopfbereich 4 und dem Aufnahmebereich 5 ist ein Codeträger 7 mit dem Adapter 3 verbunden, der über eine Codelese-Einrichtung 10 in bekannter Weise abtastbar ist. Bei dem Codeträger 7 kann es sich beispielsweise um einen solchen handeln, der mit einem Barcode, also einem Strich-Code, versehen ist oder um einen Chip bzw. Transponder und der Code-leser 10 kann beispielsweise ein solcher mit einem abtastenden Laserstrahl sein. Der Codeträger 7 kann sowohl austauschbar als auch fest mit dem Adapter 3 verbunden sein.

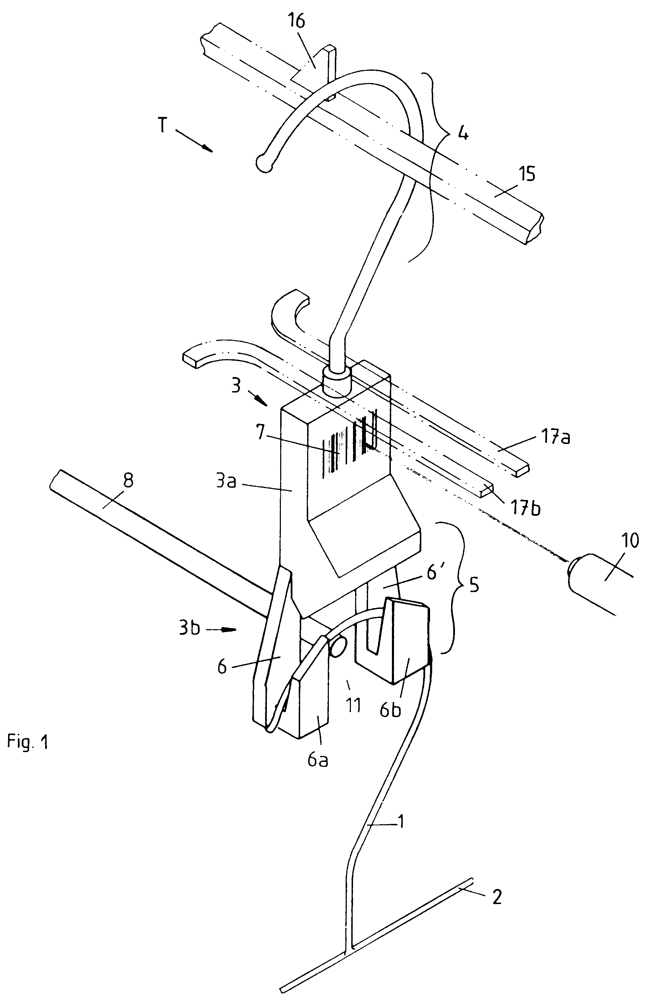

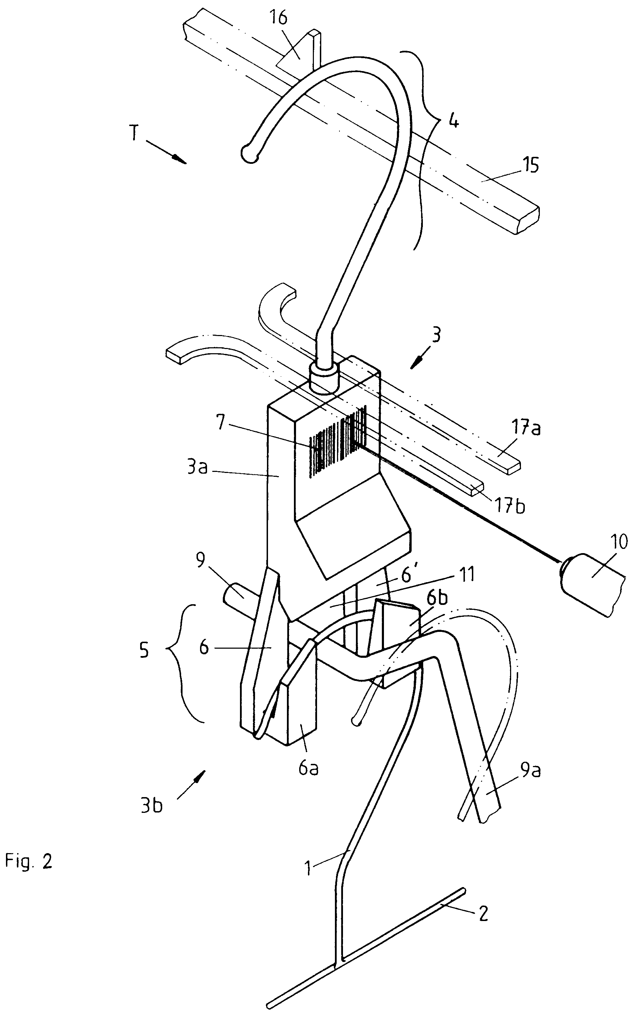

Bei dem Ausführungsbeispiel des Adapters 3 nach den Figuren 1 und 2 verlängert sich der Grundkörper 3a nach unten durch zwei parallel nebeneinander liegende Abschnitte 3b, die zwischen sich einen Zwischenraum 11 bilden. Diese Abschnitte 3b sind im Querschnitt ebenfalls U-förmig gebogen und weisen zwei parallele Schenkel 6, 6a; 6, 6b auf. Der Abstand zwischen den Schenkeln 6, 6a bzw. 6', 6b entspricht wieder dem Drahtdurchmesser D des aufzunehmenden Bügelhakens 1.

Zur automatischen Beladung (Figur 1) wird der einzuhängende Bügel 2 mit seinem Haken 1 auf die Zuführstange 8 aufgelegt oder dort mit geringer Geschwindigkeit gleitend entlangbewegt. Von hinten wird in Transportrichtung T der Adapter 3 entlang der Zuführstange an den Bügelhaken 1 herangeführt, wobei die Schenkel 6, 6a und 6', 6b die Zuführstange 8 zwischen sich aufnehmen. Der Adapter 3 wird in einer solchen Horizontallage geführt, daß die in Transportrichtung gesehen vorderen Schenkel 6a, 6b in einer Ebene unterhalb der Zuführstange 8 bewegen. Der Adapter 3 erfaßt dann mit den Schenkeln 6, 6' den oberen Bereich des Bügelhakens 1 und schiebt den Bügel 2 auf der Zuführstange 8 bis zu deren Ende, wo der Bügelhaken 1 von der Zuführstange 8 abgleitet und der Bügel aufgrund der Gravitation in den Aufnahmebereich 5 hineinrutscht.

Zur Entnahme (Figur 2) wird der Adapter 3 mit dem einhängenden Bügel 2 entlang einer Entnahmestange 9 geführt, die in Transportrichtung T zunächst ansteigt. Die Horizontallage des Adapters 3 wird hierbei nicht verändert, so daß die ansteigende Entnahmestange 9 irgendwann den Bügelhaken 1 über die Schenkel 6a, 6b hinaus anhebt und aus dem Aufnahmebereich 5 löst. Durch die zu den äußeren Seiten abgeschrägten oberen Enden der Schenkel 6a, 6b gleitet der Bügelhaken 1 in Transportrichtung T aus dem Aufnahmebereich 5 hinaus und wird von den Schenkeln 6, 6' auf der Entnahmestange 9 nach vorn geschoben. An den ansteigenden Bereich schließt sich eine Gefällstrecke 9a der Entnahmestange 9 an. An dieser nach unten führenden Gefällstrecke 9a gleiten die Bügelhaken 1 herab, während der Adapter 3 unverändert in Transportrichtung T weiter bewegt wird.

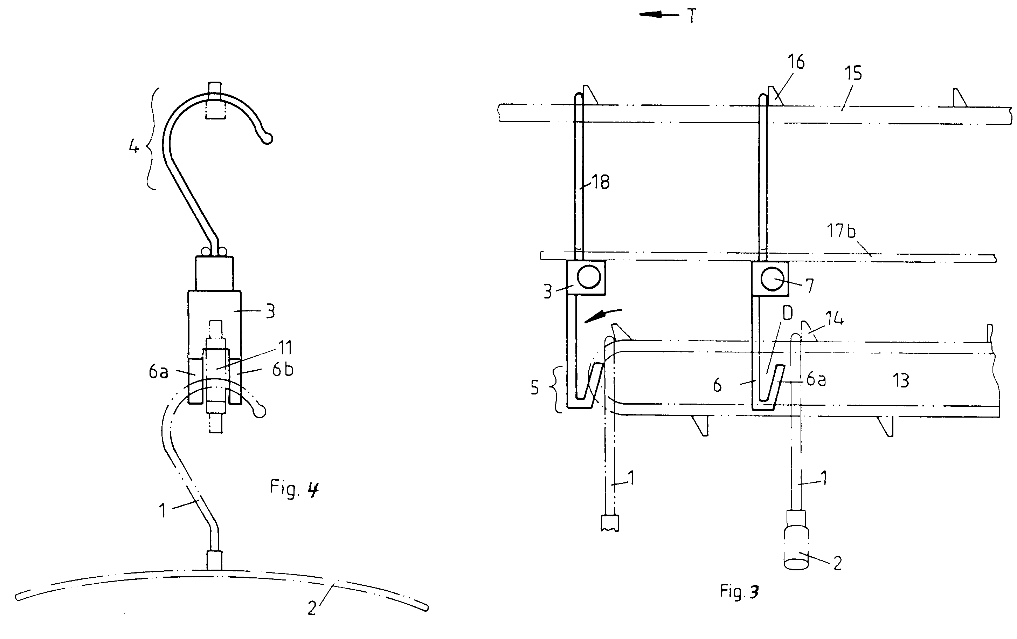

In Figur 3 ist eine weitere Möglichkeit der automatischen Beladung des Adapters 3 dargestellt. Die Bügel 2 hängen mit ihren Haken 1 auf einem vertikal umlaufenden Fördergurt 13 mit nach oben hervorstehenden Transportzähnen 14. Die zu beladenden Adapter 3 werden vom Fördermittel 15 und daran befestigten Zähnen 16 vor das Ende des Förderers 13 transportiert und dort angehalten. Der Bügelhaken 1 gleitet am Ende des Gurts von diesem herab und fällt in den Aufnahmebereich 5 des Adapters 3 hinein. Zur Führung wird der Adapter 3 mit dem Steg 18 seines Hakens 1 zwischen zwei Führungsleisten 17a, 17b bewegt, um ein Verschwenken des Adapters 3 während der Beladung zu verhindern.

Figur 5 zeigt ein Ausführungsbeispiel des Adapters 3 während der Entladungsphase. Zur Entladung wird der Adapter 3 mit dem einhängenden Bügel 2 über eine in Transportrichtung T ansteigende Entnahmestange 9' so geführt, daß sich diese im Zwischenraum 11 befindet. Die Horizontallage des Adapters 3 wird nicht verändert, so daß sich mit ansteigender Stange 9' der Bügelhaken 1 aus dem Aufnahmebereich 5 heraushebt und über die Schenkel 6a,6b entgegen der Transportrichtung auf der Stange 9' nach unten gleitet. Am Ende der Stange 9' fällt der Bügelhaken 1 auf eine nach unten abfallende Gleitstange 12, an der der Bügel 2 dann entlang rutscht. Auch hier ist der Steg 18 des Adapters 3 zwischen zwei Führungsleisten 17a, 17b gebracht, um ein seitliches Verschwenken oder Verdrehen während der Entladungsphase sicher auszuschließen.

## Patentansprüche

1. Adapter für eine Hängeförderanlage, in der auf Bügeln hängendes Gut, insbesondere Kleidungsstücke, mittels eines Fördermittels entlang einer Transportbahn sortierend oder kommissionierend transportiert wird, wobei der Adapter mit das Gut betreffenden Daten codierbar und lose zwischen dem mit einem Bügelhaken versehenen Bügel für das Gut und dem Fördermittel einfügbar ist, **gekennzeichnet durch** einen hakenförmigen Kopfbereich (4) und einen unterhalb des Kopfbereichs (4) liegenden Aufnahmebereich (5), wobei der Aufnahmebereich (5) gebildet wird durch zwei beabstandete, parallel nebeneinander liegende Abschnitte (3b), die jeweils einen U-förmigen Querschnitt aufweisen und von zwei nach oben ragenden Schenkeln (6, 6a; 6', 6b) gebildet werden, die den Bügelhaken (1) über einen solchen Bereich überdecken, daß dieser verdrehsicher in den Aufnahmebereich (5) einlegbar ist.

2. Adapter nach Anspruch 1, **dadurch gekennzeichnet, daß** die oberen Enden der Schenkel (6a, 6b) der Abschnitte (3b) nach außen seitlich abfallend ausgebildet sind.

3. Adapter nach Anspruch 1, **dadurch gekennzeichnet, daß** die Ausbildung des Kopfbereichs (4) der Ausbildung eines Bügelhakens (1) entspricht.

4. Adapter nach einem oder mehreren der vorstehenden Ansprüche, **dadurch gekennzeichnet, daß** das den Code tragende Codeelement (7) austauschbar ist.

5. Verfahren zum selbsttätigen Einhängen eines Bügels bzw. Bügelhakens (1) in den Aufnahmebereich (5) eines Adapters (3) nach einem der Ansprüche 1 bis 4, **dadurch gekennzeichnet, daß** der einzuhängende Bügel (2) mit seinem Bügelhaken (1) auf einer Zuführstange (8) ruht oder sich mit geringer Geschwindigkeit an ihr entlang bewegt,
der Adapter oberhalb der Zuführstange (8) von hinten an den Bügelhaken (1) herangeführt wird,
wobei die nebeneinander liegenden Abschnitte (3b) die Zuführstange (8) zwischen sich aufnehmen und so weit über diese eintauchen, daß ihre in Richtung des Bügelhakens (1) weisenden Schenkel (6a, 6b) sich in einer Ebene unterhalb der Führungsstange (8) befinden,
der Adapter mit den hinteren Schenkeln (6, 6') an die obere Krümmung des Bügelhakens (1) anstößt und den Bügel (2) an seinem Bügelhaken (1) bis ans Ende der Zuführstange (8) schiebt,
wo der Bügelhaken (1) aufgrund der Gravitation in den Aufnahmebereich (5) fällt.

6. Verfahren zum selbsttätigen Entnehmen eines Bügels (2) bzw. Bügelhakens (1) aus dem Aufnahmebereich (5) eines Adapters (3) nach einem der Ansprüche 1 bis 4, **dadurch gekennzeichnet, daß** der Adapter (3) mit dem einhängenden Bügel und den vorderen kurzen Schenkeln (6a,6b) voran über eine in Transportrichtung (T) ansteigende Entnahmestange (9) so geführt wird, daß sich diese unterhalb und zwischen den nebeneinander liegenden Abschnitten (3b) befindet,
der Adapter (3) unter Beibehaltung seiner Horizontallage soweit entlang der Entnahmestange (9) geführt wird, bis diese den Bügelhaken (1) von unten über die in Transportrichtung (T) vorderen kurzen Schenkel (6a, 6b) der Abschnitte (3b) anhebt, wodurch der Kontakt zwischen Bügelhaken (1) und Aufnahmebereich (5) gelöst wird und der Bügelhaken (1) in Transportrichtung (T) über die Schenkel (6a, 6b) hinaus gehoben und von den Schenkeln (6, 6') auf der Entnahmestange (9) nach vorn geschoben wird, bis er über eine sich an die Steigungsstrecke der Entnahmestange (9) anschließende Gefällstrecke (9a) aufgrund der Gravitation über die Schenkel (6a,6b) hinweg herabgleitet.

7. Verfahren zum selbstätigen Entnehmen eines Bügels (2) bzw. Bügelhakens (1) aus dem Aufnahmebereich (5) eines Adapters (3) nach einem der Ansprüche 1 bis 4, **dadurch gekennzeichnet, daß** der Adapter mit dem einhängenden Bügel und den hinteren Schenkeln (6, 6') voran über eine in Transportrichtung (T) ansteigende Entnahmestange (9') so geführt wird, daß sich diese unterhalb und zwischen den nebeneinander liegenden Abschnitten (3b) befindet, der Adapter (3) unter Beibehaltung seiner Horizontallage so weit entlang der Entnahmestange (9') geführt wird, bis diese den Bügelhaken (1) von unten über die in Transportrichtung (T) hinteren kurzen Schenkel (6a, 6b) der Abschnitte (3b) anhebt, wodurch der Kontakt zwischen Bügelhaken (1) und Aufnahmebereich (5) gelöst wird und der Bügelhaken über die Schenkel (6a, 6b) hinausgehoben und entgegen der Transportrichtung (T) an der Entnahmestange (9') herabgleitet.

8. Verfahren nach einem der Ansprüche 5 bis 7, **dadurch gekennzeichnet, daß** zur Stabilisierung des Adapters der Adapterhaken mit seinem Steg (18) zwischen zwei parallel verlaufende Führungsleisten (17a, 17b) eingeführt wird, wobei der Abstand der Führungsleisten (17a, 17b) nur geringfügig größer als der Durchmesser des Stegs (18) ist.

## Claims

1. An adapter for an overhead conveyor system wherein articles, particularly articles of clothing, on hangers are conveyed by a conveying means along a track for sorting or consignment, the adapter being codable with details relating to the articles and loosely insertable between the conveying means and the hanger, which is provided with a hook for the article, **characterised by** a hooked head region (4) and a receiving region (5) underneath the head region (4), the receiving region (5) being formed by two spaced-apart parallel portions (3b) each having a U-shaped cross-section defined by two upwardly projecting arms (6,6a; 6',6b), which overlap the hanger hook (1) over such an area that the hook can be inserted without twisting into the receiving region (5).

2. An adapter according to claim 1, **characterised in that** the top ends of the arms (6a,6b) of the portions (3b) slope down sideways towards the exterior.

3. An adapter according to claim 1, **characterised in that** the formation of the head region (4) corresponds to the formation of a hanger hook (1).

4. An adapter according to one or more of the preceding claims, **characterised in that** the code-bearing coding element (7) is interchangeable.

5. A method of automatically suspending a hanger or hanger hook (1) in the receiving region (5) of an adapter (3) according to any of claims 1 to 4, **characterised in that** the hook (1) of the hanger (2) to be suspended rests on a supply rod (8) or moves along the rod at low speed,
the adapter is moved above the supply rod (8) from behind on to the hanger hook (1),
whereby the adjacent portions (3b) receive the supply rod (8) between them and descend beyond it to a distance such that their arms (6a,6b) pointing in the direction of the hanger hook (1) are in a plane below the guide rod (8), the rear arms (6,6') of the adapter strike the upper curve of the hanger hook (1) and push the hanger (2) via its hook (1) to the end of the supply rod (8), where the hook (1) falls through gravity into the receiving region (5).

6. A method of automatically removing a hanger (2) or hanger hook (1) from the receiving region (5) of an adapter (3) according to any of claims 1 to 4, **characterised in that** the adapter (3) with the suspended hanger and led by the front short arms (6a,6b) is guided in such a manner along a removing rod (9) rising in the conveying direction (T), that the removing rod is underneath and between the adjacent portions (3b),
the adapter (3) while retaining its horizontal position is guided along the removing rod (9) thus far until the removing rod raises the hook (1) from beneath above the leading front short arms (6a,6b) of the portion (3b) in the direction (T) of conveyance, thus breaking contact between hook (1) and receiving region (5),
and the hook (1) is raised in the conveying direction (T) above the arms (6a,6b) and is moved forward via the arms (6,6') on the removing rod (9), until it slides through gravity over the arms (6a,6b) along a descending section (9a) adjoining the rising section of the removing rod (9).

7. A method of automatically removing a hanger (2) or hanger hook (1) from the receiving region (5) of an adapter (3) according to any of claims 1 to 4, **characterised in that** the adapter with the suspended hanger and led by the rear arms (6,6') is guided in such a manner along a removing rod (9') rising in the conveying direction (T), that the rod is underneath and between the adjacent portions (3b), the adapter (3) while retaining its horizontal position is guided along the removing rod ( 9') thus far until the removing rod raises the hook (1) from beneath above the rear short arms (6a,6b) of the portion (3b) in the conveying direction (T), thus breaking contact between hook (1) and receiving region (5),
and the hook is raised above the ams (6a,6b) and slides along the removing rod (9') in the direction opposite to the conveying direction (T).

8. A method according to any of claims 5 to 7, **characterised in that** in order to stabilise the adapter, the web (18) of the adapter hook is inserted between two parallel guide strips (17a,17b), the distance between the guide strips (17a,17b) being only slightly greater than the diameter of the web (18).

## Revendications

1. Adaptateur pour convoyeur suspendu, dans lequel un produit, en particulier des vêtements, suspendu sur des cintres est transporté au moyen d'un moyen de transport le long d'un trajet de transport, par catégories ou par commandes préparées, l'adaptateur étant codable avec des données concernant le produit et insérable de manière libre entre le moyen de transport et le cintre pour le produit, le cintre étant muni d'un crochet de cintre, caractérisé par une zone de tête (4) en forme de crochet et une zone de réception (5) s'étendant en-dessous de la zone de tête (4), la zone de réception (5) étant constituée par deux tronçons (3b) qui s'étendent à distance parallèlement l'un à côté de l'autre, présentent chacun une section en forme de U et sont constitués par deux branches (6, 6a ; 6', 6b) dirigées vers le haut, lesquelles chevauchent le crochet de cintre (1) sur une zone telle que celui-ci est insérable dans la zone de réception (5) d'une manière l'empêchant de tourner.

2. Adaptateur selon la revendication 1, caractérisé en ce que les extrémités supérieures des branches (6a, 6b) des tronçons (3b) sont réalisées avec une pente dirigée latéralement vers l'extérieur.

3. Adaptateur selon la revendication 1, caractérisé en ce que l'agencement de la zone de tête (4) correspond à l'agencement d'un crochet de cintre (1).

4. Adaptateur selon une ou plusieurs des revendications précédentes, caractérisé en ce que l'élément de codage (7) portant le code est interchangeable.

5. Procédé pour accrocher automatiquement un cintre et respectivement un crochet de cintre (1) dans la zone de réception (5) d'un adaptateur (3) selon l'une des revendications 1 à 4, caractérisé en ce que le cintre (2) à accrocher repose par son crochet de cintre (1) sur une barre d'alimentation (8) ou bien se déplace à faible vitesse le long de celle-ci,
l'adaptateur est amené de l'arrière vers le crochet de cintre (1) au-dessus de la barre d'alimentation (8),
les tronçons s'étendant côte-à-côte (3b) recevant entre eux la barre d'alimentation (8) et plongeant suffisamment sur celle-ci pour que leurs branches (6a, 6b) dirigées vers le crochet de cintre (1) se trouvent dans un plan situé en-dessous de la barre d'alimentation (8),
l'adaptateur bute par les branches arrière (6, 6') contre la voûte supérieure du crochet de cintre (1) et pousse le cintre (2) sur son crochet de cintre (1) jusqu'à l'extrémité de la barre d'alimentation (8),
où le crochet de cintre (1) tombe dans la zone de réception (5) en raison de la gravité.

6. Procédé pour prélever automatiquement un cintre (2) et respectivement un crochet de cintre (1) de la zone de réception (5) d'un adaptateur (3) selon l'une des revendications 1 à 4, caractérisé en ce que l'adaptateur (3) avec le cintre qui y est suspendu et les branches avant courtes (6a, 6b) est guidé vers l'avant sur une tige de prélèvement (9) montant dans la direction de transport (T), de sorte que celle-ci se trouve sous et entre les troncons (3b) s'étendant côte-à-côte, l'adaptateur (3), tout en étant maintenu dans sa position horizontale, est guidé suffisamment loin le long de la tige de prélèvement (9) pour que celle-ci soulève le crochet de cintre (1) d'en-bas au-dessus des branches courtes (6a, 6b) des tronçons (3b), situées en avant relativement à la direction de transport (T), de sorte que le contact entre crochet de cintre (1) et zone de réception (5) est supprimé et le crochet de cintre (1) est soulevé au-delà des branches (6a, 6b) dans la direction de transport (T) et poussé par les branches (6, 6') vers l'avant sur la tige de prélèvement (9) jusqu'à ce qu'il s'évacue en glissant par gravité au-delà des branches (6a, 6b) sur un parcours en pente descendante (9a) se raccordant au parcours montant de la tige de prélèvement (9).

7. Procédé pour prélever automatiquement un cintre (2) et respectivement un crochet de cintre (1) de la zone de réception (5) d'un adaptateur (3) selon l'une des revendications 1 à 4, caractérisé en ce que l'adaptateur (3) avec le cintre qui y est suspendu et les branches avant courtes (6a, 6b) est guidé vers l'avant sur une tige de prélèvement (9') montant dans la direction de transport (T), de sorte que celle-ci se trouve sous et entre les tronçons (3b) s'étendant côte-à-côte, l'adaptateur (3), tout en étant maintenu dans sa position horizontale, est guidé suffisamment loin le long de la tige de prélèvement (9') pour que celle-ci soulève le crochet de cintre (1) d'en-bas au-dessus des branches courtes (6a, 6b) des tronçons (3b), situées en arrière relativement à la direction de transport (T), de sorte que le contact entre crochet de cintre (1) et zone de réception (5) est supprimé et le crochet de cintre (1) est soulevé au-delà des branches (6a, 6b) dans la direction de transport (T) et s'évacue en glissant sur la tige de prélèvement (9') en sens contraire de la direction de transport (T).

8. Procédé selon l'une des revendications 5 à 7, caractérisé en ce que pour stabiliser l'adaptateur, le crochet d'adaptateur est guidé par sa tige (18) entre deux barrettes de guidage (17a, 17b) s'étendant parallèlement, la distance des barrettes de guidage (17a, 17b) n'étant que légèrement supérieure au diamètre de la tige (18).
